# FASCICULE DE BREVET EUROPEEN

(11) **EP 4 448 447 B1**
(45) Date de publication et mention de la délivrance du brevet: **16.07.2025**
(21) Numéro de dépôt: 22839403.7
(22) Date de dépôt: 01.12.2022
(51) Int. Cl.: C01B 21/086, H01M 10/0568, H01M 10/0525

(54) **PROCÉDÉ DE PRÉPARATION DU BIS(FLUOROSULFONYL)IMIDURE DE LITHIUM**
VERFAHREN ZUR HERSTELLUNG VON LITHIUM-BIS(FLUORSULFONYL)IMID
METHOD FOR PRODUCING LITHIUM BIS(FLUOROSULFONYL)IMIDE

(30) Priorité: 16.12.2021 FR 2113700
(43) Date de publication de la demande: 23.10.2024
(73) Titulaire: ARKEMA FRANCE, 92800 Puteaux (FR)
(72) Inventeur: LOGETTE, Sébastien, 69491 PIERRE-BENITE Cedex (FR); JOUANNEAU, Julien, 69491 PIERRE-BENITE Cedex (FR); COUTURIER, Jean-Luc, 69491 PIERRE-BENITE Cedex (FR)
(74) Mandataire: Arkema Patent
(86) Numéro de dépôt international: PCT/FR2022/052214
(87) Numéro de publication internationale: WO 2023/111417

(56) Documents cités:
- EP-B1- 2 714 588
- CN-A- 110 436 424
- FR-A1- 3 088 931
- FR-A1- 3 089 214
- JP-A- 2014 201 453

## Description

### Domaine de l'invention

La présente invention concerne un procédé de préparation du bis(fluorosulfonyl)imidure de lithium comprenant une étape de diafiltration sur une membrane de nanofiltration.

### Arrière-plan technique

Les anions de type sulfonylimide, de par leur très faible basicité, sont de plus en plus utilisés dans le domaine du stockage d'énergie sous forme de sels inorganiques dans les batteries, ou de sels organiques dans les super condensateurs ou dans le domaine des liquides ioniques. Le marché des batteries étant en plein essor et la réduction des coûts de fabrication des batteries devenant un enjeu majeur, un procédé de synthèse à grande échelle et à bas coût de ce type d'anions est nécessaire.

Dans le domaine spécifique des batteries Li-ion, le sel actuellement le plus utilisé est le LiPF₆ mais ce sel montre de nombreux désavantages tels qu'une stabilité thermique limitée, une sensibilité à l'hydrolyse et donc une plus faible sécurité de la batterie. Récemment, de nouveaux sels possédant le groupement FSO²⁻ ont été étudiés et ont démontré de nombreux avantages comme une meilleure conductivité ionique et une résistance à l'hydrolyse. L'un de ces sels, le LiFSI (LiN(FSO₂)₂) a montré des propriétés très intéressantes qui font de lui un bon candidat pour remplacer le LiPF₆.

La plupart des procédés de préparation de sels d'imides contenant un groupement fluorosulfonyle comprennent de nombreuses étapes, ce qui a pour conséquence de former des produits secondaires présentant des propriétés physiques telles que leur élimination peut s'avérer complexe, et/ou nécessiter des étapes de purification coûteuses. De plus, suite à la réaction de lithiation pour obtenir le sel désiré, une quantité importante d'eau peut être présente dans la solution comprenant le sel d'imide. Il est important de pouvoir réduire, voire éliminer cette quantité d'eau.

La déshydratation des solvants organiques est un procédé énergivore. La distillation et les autres méthodes de séparation thermique représentent 80% de l'énergie consommée pour les séparations industrielles, ce qui montre la nécessité d'une séparation plus efficace.

Le document WO 2015/004236 concerne un procédé de production d'un mélange liquide déshydraté destiné à être utilisé comme solvant pour des sels conducteurs (par ex. LiPF₆) dans lequel la teneur en eau est réduite, à partir d'un mélange liquide de départ comprenant un, deux, trois ou plus de carbonates organiques en une quantité totale de 90 % en poids ou plus, sur la base de la quantité totale du mélange liquide de départ et un, deux ou plusieurs composés choisis dans le groupe constitué par des acides avec un pKa inférieur à 4 et des précurseurs libérant des acides avec un pKa inférieur à 4 dans le mélange liquide de départ par hydrolyse.

Le document FR 3089214 concerne un procédé de préparation de sel d'imides contenant un groupement fluorosulfonyle, le procédé comprenant une étape b) comprenant une étape de fluoration avec HF anhydre, en présence d'au moins un solvant organique immiscible à l'eau ; une étape comprenant la réaction de la composition obtenue à l'étape précédente avec une composition aqueuse comprenant au moins une base lithiée.

Le document US 2012/0141868 concerne une zéolithe permettant un traitement de déshydratation d'une solution électrolytique non aqueuse sans poser de problème d'élution du sodium de la zéolithe lors de la déshydratation d'une solution électrolytique non aqueuse pour une batterie au lithium en utilisant une zéolithe.

Le document US 2020/0148633 concerne un procédé de préparation de bis(fluorosulfonyl)imide d'hydrogène comprenant la mise en contact de fluorure de sulfonyle avec de l'hexaméthyldisilazane dans un solvant organique. Ce document concerne également un procédé de préparation de bis(fluorosulfonyl)imidure de lithium (LiFSI) par la mise en contact du bis(fluorosulfonyl)imide d'hydrogène avec un composé du lithium.

Le document JP 2002001107 concerne une zéolite de type faujasite cristallin à faible teneur en silice pour traiter un électrolyte non aqueux et un procédé pour fabriquer l'électrolyte non aqueux en utilisant la zéolite.

Le document CN110436424 A décrit une méthode de préparation du bis(fluorosulfonyl)imidure de lithium comprenant la mise en contact du bis(fluorosulfonyl)imide avec une base de lithium (e.g. l'hydroxyde de lithium ou le carbonate de lithium) dans un solvant comme par exemple le carbonate de diméthyle, le carbonate de méthyle éthyle, l'acétonitrile, l'éthylène glycol diméthyl éther.

Le document JP2014201453 A divulgue un procédé de synthèse d'un bis(fluorosulfonyl)imidure de métal alcalin, en particulier le lithium, en présence d'un solvant choisi, entre autres, parmi les carbonates, les éthers et les nitriles

Il existe donc un réel besoin de fournir un procédé de préparation de sels d'imides contenant un groupement fluorosulfonyle, notamment du bis(fluorosulfonyl)imidure de lithium, qui permet de réduire la consommation énergétique mais aussi la quantité de solvant utilisé lors du procédé, par rapport aux techniques existantes. De plus, il existe un besoin de fournir un procédé de préparation de sels d'imides contenant un groupement fluorosulfonyle, notamment du bis(fluorosulfonyl)imidure de lithium, qui permet non seulement d'éviter la lithiation par des composés toxiques, tels que le fluorure de lithium mais aussi de diminuer les étapes de purification du procédé.

### Résumé de l'invention

L'invention concerne en premier lieu un procédé de préparation du bis(fluorosulfonyl)imidure de lithium, comprenant les étapes suivantes :
- mise en contact du bis(fluorosulfonyl)imide avec une base de lithium dans un solvant choisi parmi les carbonates, les éthers et les nitriles pour obtenir un mélange comprenant du bis(fluorosulfonyl)imidure de lithium et de l'eau ;
- diafiltration du mélange sur une membrane de nanofiltration de sorte à obtenir d'une part un concentrat enrichi en bis(fluorosulfonyl)imidure de lithium et appauvri en eau et d'autre part un perméat appauvri en bis(fluorosulfonyl)imidure de lithium et enrichi en eau.

Selon certains modes de réalisation, le solvant est un carbonate, de préférence choisi parmi le carbonate de diméthyle, le carbonate de méthyle éthyle, le carbonate de diéthyle, le carbonate d'éthylène, le carbonate de propylène, le carbonate de butylène, le carbonate de diphényle, le carbonate de méthyle phényle, le carbonate de dipropyle, le carbonate de méthyle et de propyle, le carbonate d'éthyle et de propyle, le carbonate de vinylène, le fluoroethylène carbonate, le trifluoropropylène carbonate ou leurs mélanges.

Selon certains modes de réalisation, la base de lithium est choisie parmi l'hydroxyde de lithium, le carbonate de lithium, et leurs mélanges.

Selon certains modes de réalisation, la membrane de nanofiltration présente un seuil de coupure de 80 à 250 Daltons, de préférence de 100 à 200 Daltons et encore de préférence de 120 à 180 Daltons.

Selon certains modes de réalisation, le procédé comprend une étape de pervaporation entre l'étape de mise en contact du bis(fluorosulfonyl)imide avec une base de lithium et l'étape de diafiltration.

Selon certains modes de réalisation, le procédé comprend une étape de distillation azéotropique entre l'étape de mise en contact du bis(fluorosulfonyl)imide avec une base de lithium et l'étape de diafiltration.

Selon certains modes de réalisation, le concentrat enrichi en bis(fluorosulfonyl)imidure de lithium et appauvri en eau comprend une teneur en eau égale ou inférieure à 100 ppm, de préférence égale ou inférieure à 50 ppm, et encore de préférence égale ou inférieure à 20 ppm par rapport au poids du concentrat.

Selon certains modes de réalisation, du solvant est ajoutée lors de l'étape de diafiltration au concentrat, le solvant étant de préférence le même que le solvant utilisé dans l'étape de mise en contact du bis(fluorosulfonyl)imide avec une base de lithium.

Selon certains modes de réalisation, l'étape de diafiltration est effectuée à une pression de 1 à 60 bar.

L'invention concerne également un procédé de préparation d'un électrolyte de batterie Li-ion comprenant :
- la préparation du bis(fluorosulfonyl)imidure de comme décrit ci-dessus ;
- la préparation d'un électrolyte comprenant le bis(fluorosulfonyl)imidure de lithium.

La présente invention permet de répondre au besoin exprimé ci-dessus). Elle fournit plus particulièrement un procédé de préparation du bis(fluorosulfonyl)imidure de lithium, qui permet de réduire la consommation énergétique mais aussi la quantité de solvant utilisé lors du procédé, par rapport aux techniques existantes. De plus, la présente invention fournit également un procédé de préparation du bis(fluorosulfonyl)imidure de lithium, qui permet non seulement d'éviter la lithiation par des composés toxiques, tels que le fluorure de lithium mais aussi de diminuer les étapes de purification du procédé.

Cela est accompli grâce au procédé de la présente invention. Plus particulièrement, ce procédé comprend une première étape de mise en contact du bis(fluorosulfonyl)imide avec une base de lithium (capable de générer de l'eau après sa réaction avec le bis(fluorosulfonyl)imide) dans un solvant choisi parmi les carbonates, les éthers et les nitriles, pour former un mélange comprenant le sel de bis(fluorosulfonyl)imidure de lithium et de l'eau. L'utilisation d'une telle base de lithium ainsi que le fait que l'eau peut efficacement être éliminée par la suite, permet d'éviter l'utilisation des sels de lithium toxiques.

Ensuite, l'étape de diafiltration sur une membrane de nanofiltration permet d'éliminer efficacement la quantité d'eau restante sans utiliser des méthodes qui augmentent la consommation énergétique du procédé, ni la consommation de solvant.

Enfin, lors de cette étape de diafiltration, des différentes impuretés présentes dans le mélange obtenu après l'étape de mise en contact du bis(fluorosulfonyl)imide avec la base de lithium peuvent également être éliminées, ce qui permet de réduire, voire éviter des étapes de purification additionnelles.

### Description détaillée

L'invention est maintenant décrite plus en détail et de façon non limitative dans la description qui suit.

### Batterie lithium

Une batterie lithium comprend au moins une cellule électrochimique, et de préférence une pluralité de cellules électrochimiques. Chaque cellule électrochimique comporte une électrode négative, une électrode positive et un électrolyte interposé entre l'électrode négative et l'électrode positive.

Chaque cellule électrochimique peut aussi comprendre un séparateur, dans lequel est imprégné l'électrolyte.

Les cellules électrochimiques peuvent être assemblées en série et/ou en parallèle dans la batterie.

Par « *électrode négative* », on entend l'électrode qui fait office d'anode, quand la batterie débite du courant (c'est-à-dire lorsqu'elle est en processus de décharge) et qui fait office de cathode lorsque la batterie est en processus de charge.

L'électrode négative comprend typiquement un matériau électrochimiquement actif, éventuellement un matériau conducteur électronique, et éventuellement un liant.

Par « *électrode positive* », on entend l'électrode qui fait office de cathode, quand la batterie débite du courant (c'est-à-dire lorsqu'elle est en processus de décharge) et qui fait office d'anode lorsque la batterie est en processus de charge.

L'électrode positive comprend typiquement un matériau électrochimiquement actif, éventuellement un matériau conducteur électronique, et éventuellement un liant.

On entend par « *matériau électrochimiquement actif* » un matériau capable d'insérer de manière réversible des ions.

On entend par « *matériau conducteur électronique* » un matériau capable de conduire les électrons.

L'électrode négative de la cellule électrochimique peut notamment comprendre, comme matériau électrochimiquement actif, du lithium métallique. Ce lithium métallique peut être sous forme essentiellement pure, ou sous forme d'un alliage. Parmi les alliages à base de lithium susceptibles d'être utilisés, on peut par exemple citer les alliages lithium-aluminium, les alliages lithium-silice, les alliages lithium-étain, Li-Zn, Li₃Bi, Li₃Cd et Li₃SB. Des mélanges des matériaux ci-dessus peuvent aussi être employés.

L'électrode négative peut être sous forme de film ou de tige. Un exemple d'électrode négative peut comprendre un film de lithium vif préparé par laminage, entre des rouleaux, d'un feuillard de lithium.

L'électrode positive comprend un matériau électrochimiquement actif, de préférence de type oxyde, et de préférence choisi parmi le dioxyde de manganèse (MnO₂), l'oxyde de fer, l'oxyde de cuivre, l'oxyde de nickel, les oxydes composites lithium-manganèse (par exemple LiₓMn₂O₄ ou LiₓMnO₂), les oxydes composites lithium-nickel (par exemple LiₓNiO₂), les oxydes composites lithium-cobalt (par exemple LiₓCoO₂), les oxydes composites lithium-nickel-cobalt (par exemple LiNi_{1-y}Co_{y}O₂), les oxydes composites lithium-nickel-cobalt-manganèse (par exemple LiNiₓMn_{y}Co_{z}O₂ avec x+y+z = 1), les oxydes composites lithium-nickel-cobalt-manganèse enrichis en lithium (par exemple Li₁₊ₓ(NiₓMn_{y}Co_{z})₁₋ₓO₂), les oxydes composites de lithium et de métal de transition, les oxydes composites de lithium-manganèse-nickel de structure spinelle (par exemple LiₓMn_{2-y}Ni_{y}O₄), les oxydes de vanadium, et leurs mélanges.

De préférence, l'électrode positive comprend un matériau électrochimiquement actif qui est un oxyde composite lithium-nickel-manganèse-cobalt à haut taux de nickel (LiNiₓMn_{y}Co_{z}O₂ avec x+y+z = 1, en abrégé NMC, avec x>y et x>z), ou un oxyde composite lithium-nickel-cobalt-aluminium à haut taux de nickel (LiNi_{x'}Co_{y'}Al_{z'} avec x'+y'+z'=1, en abrégé NCA, avec x'>y' et x'>z').

Des exemples particuliers de ces oxydes sont le NMC532 (LiNi_{0,5}Mn_{0,3}Co_{0,2}O₂), le NMC622 (LiNi_{0,6}Mn_{0,2}Co_{0,2}O₂) et le NMC811 (LiNi_{0,8}Mn_{0,1}CO_{0,1}O₂).

Le matériau de chaque électrode peut aussi comprendre, outre le matériau électrochimiquement actif, un matériau conducteur électronique comme une source de carbone, incluant, par exemple, du noir de carbone, du carbone Ketjen^{®}, du carbone Shawinigan, du graphite, du graphène, des nanotubes de carbone, des fibres de carbone (par exemple les fibres de carbone formées en phase gazeuse ou VGCF), du carbone non-poudreux obtenu par carbonisation d'un précurseur organique, ou une combinaison de deux ou plus de ceux-ci. D'autres additifs peuvent aussi être présents dans le matériau de l'électrode positive, comme des sels de lithium ou des particules inorganiques de type céramique ou verre, ou encore d'autres matériaux actifs compatibles (par exemple, du soufre).

Le matériau de chaque électrode peut aussi comprendre un liant. Des exemples non-limitatifs de liants comprennent les liants polymères polyéthers linéaires, ramifiés et/ou réticulé (par exemple, des polymères basés sur le poly(oxyde d'éthylène) (PEO), ou le poly(oxyde de propylène) (PPO) ou d'un mélange des deux (ou un co-polymère EO/PO), et comprenant éventuellement des unités réticulables), des liants solubles dans l'eau (tels que SBR (caoutchouc styrène-butadiène), NBR (caoutchouc acrylonitrile-butadiène), HNBR (NBR hydrogéné), CHR (caoutchouc d'épichlorohydrine), ACM (caoutchouc d'acrylate)), ou des liants de type polymères fluorés (tels que PVDF (fluorure de polyvinylidène), PTFE (polytétrafluoroéthylène), et leurs combinaisons. Certains liants, comme ceux solubles dans l'eau, peuvent aussi comprendre un additif comme la CMC (carboxyméthylcellulose).

Le séparateur peut être un film polymère poreux. A titre d'exemple non limitatif, le séparateur peut être constitué d'un film poreux de polyoléfine tel que des homopolymères d'éthylène, des homopolymères de propylène, des copolymères d'éthylène/butène, des copolymères d'éthylène/héxène, des copolymères éthylène/méthacrylate, ou des structures multicouches des polymères ci-dessus.

L'électrolyte comprend au moins un sel de lithium et de préférence, il comprend une pluralité de sels de lithium.

Dans le cadre de l'invention, le sel de lithium comprend du bis(fluorosulfonyl)imidure de lithium (LiFSI).

Selon certains modes de réalisation, le sel de lithium consiste essentiellement, voir consiste en bis(fluorosulfonyl)imidure de lithium (LiFSI).

Selon d'autres modes de réalisation, le sel de lithium comprend du bis(fluorosulfonyl)imidure de lithium ainsi qu'un ou plusieurs sels additionnels choisis parmi le 2-trifluorométhyl-4,5-dicyano-imidazolate de lithium (LiTDI), le bis(trifluoromethanesulfonyl)imide de lithium (LiTFSI), le bis(oxalato)borate de lithium (LiBOB), le difluoro(oxalato)borate de lithium (LiDBOB), le difluorophosphate de lithium (LiPO₂F₂), et le tétrafluoroborate de lithium (LiBF₄).

Le solvant d'électrolyte peut être choisi parmi les éthers, les esters, les cétones, les alcools, les nitriles, les carbonates, les amides, les sulfamides et sulfonamides et leurs mélanges. De préférence le solvant d'électrolyte comprend au moins un solvant choisi parmi les carbonates, les éthers et les nitriles, et encore de préférence, le solvant d'électrolyte comprend au moins un carbonate.

Parmi les éthers, on peut citer les éthers linéaires ou cycliques, tels que par exemple le diméthoxyéthane (DME), les éthers méthyliques des oligoéthylène glycols de 2 à 5 unités oxyéthylènes, le dioxolane, le dioxane, le dibutyle éther, le tétrahydrofurane, et leurs mélanges.

Parmi les esters, on peut citer les esters d'acide phosphorique ou les esters de sulfite. On peut par exemple citer le formate de méthyle, l'acétate de méthyle, le propionate de méthyle, l'acétate d'éthyle, l'acétate de butyle, la gamma butyrolactone ou leurs mélanges.

Parmi les cétones, on peut notamment citer la cyclohexanone.

Parmi les alcools, on peut par exemple citer l'alcool éthylique, l'alcool isopropylique.

Parmi les nitriles, on peut citer par exemple l'acétonitrile, le pyruvonitrile, le propionitrile, le méthoxypropionitrile, le diméthylaminopropionitrile, le butyronitrile, l'isobutyronitrile, le valéronitrile, le pivalonitrile, l'isovaléronitrile, le glutaronitrile, le méthoxyglutaronitrile, le 2-méthylglutaronitrile, le 3-méthylglutaronitrile, l'adiponitrile, le malononitrile, le 1,2,6-tricyanohexane et leurs mélanges.

Parmi les carbonates, on peut citer par exemple les carbonates cycliques tels que par exemple le carbonate d'éthylène (EC) (CAS : 96-49-1), le carbonate de propylène (PC) (CAS : 108-32-7), le carbonate de butylène (BC) (CAS : 4437-85-8), le carbonate de diméthyle (DMC) (CAS : 616-38-6), le carbonate de diéthyle (DEC) (CAS : 105-58-8), le carbonate de méthyle éthyle (EMC) (CAS : 623-53-0), le carbonate de diphényle(CAS 102-09-0), le carbonate de méthyle phényle (CAS : 13509-27-8), le carbonate de dipropyle (DPC) (CAS : 623-96-1), le carbonate de méthyle et de propyle (MPC) (CAS : 1333-41-1), le carbonate d'éthyle et de propyle (EPC), le carbonate de vinylène (VC) (CAS : 872-36-6), le fluoroethylène carbonate (FEC) (CAS : 114435-02-8), le trifluoropropylène carbonate (CAS : 167951-80-6) ou leurs mélanges.

Parmi les amides, on peut citer le diméthylformamide, la N-méthylpyrrolidinone.

De manière plus préférée, le solvant d'électrolyte est choisi parmi l'EC, l'EMC, les mélanges d'EC et d'EMC, les mélanges d'EC et de DMC, les mélanges d'EC et de DEC, les mélanges d'EC et de DEC, le PC, les mélanges d'EC, de DMC et d'EMC.

De manière optionnelle, l'électrolyte peut comprendre un ou plusieurs polymères polaires. Le polymère polaire comprend de préférence des unités monomères dérivées de l'oxyde d'éthylène, l'oxyde de propylène, l'épichlorohydrine, l'épifluorohydrine, le trifluoroépoxypropane, l'acrylonitrile, le méthacrylonitrile, les esters et amides de l'acide acrylique et méthacrylique, le fluorure de vinylidène, la N-méthylpyrrolidone et/ou les polyélectrolytes de type polycation ou polyanion. Lorsque la présente composition électrolytique comprend plus d'un polymère, au moins un de ceux-ci peut être réticulé.

De plus, l'électrolyte peut comprendre un ou plusieurs additifs. Le ou les additifs peuvent être choisis parmi le groupe constitué du carbonate de fluoroéthylène (FEC), du carbonate de vinylène, du 4-vinyl-1,3-dioxolan-2-one, de la pyridazine, de la vinyl pyridazine, de la quinoline, de la vinyl quinoline, du butadiène, du sébaconitrile, des alkyldisulfure, du fluorotoluène, du 1,4-diméthoxytétrafluorotoluène, du t-butylphenol, du di-t-butylphenol, du tris(pentafluorophenyl)borane, des oximes, des époxydes aliphatiques, des biphényls halogénés, des acides métacryliques, du carbonate d'allyle éthyle, de l'acétate de vinyle, de l'adipate de divinyle, du propanesultone, de l'acrylonitrile, du 2-vinylpyridine, de l'anhydride maléïque, du cinnamate de méthyle, des phosphonates, des composés silane contenant un vinyle, et/ou du 2-cyanofurane.

Le au moins un sel de lithium peut être présent dans l'électrolyte à une teneur de 0,1 à 50% par rapport au poids de l'électrolyte.

### Procédé

Le procédé selon l'invention permet de préparer une solution de bis(fluorosulfonyl)imidure de lithium ayant une teneur faible en eau et pouvant être utilisé en tant qu'électrolyte de batterie Li-ion soit directement, soit après addition de sels, solvants et/ou additifs.

Le procédé selon l'invention comprend une étape de mise en contact du bis(fluorosulfonyl)imide avec une base de lithium dans un solvant, pour former un mélange comprenant le bis(fluorosulfonyl)imidure de lithium et de l'eau.

Le bis(fluorosulfonyl)imide utilisé dans cette étape peut être obtenu à partir d'un sulfonamide de formule (I) suivante par une étape de chloration :

(I) R-(SO₂)-NH₂

dans laquelle R peut être choisi parmi un atome de fluor, un atome de chlore ou un groupement hydroxy.

Cette étape peut être effectuée avec au moins un acide soufré et au moins un agent chlorant.

De plus cette étape peut être réalisée :
- à une température comprise entre 30°C et 150°C ; et/ou
- avec un temps de réaction compris entre 1 heure et 7 jours ; et/ou
- à une pression comprise entre 1 bar abs et 20 bar abs.

Selon l'invention, l'agent soufré peut être choisi dans le groupe constitué de l'acide chlorosulfonique (ClSO₃H), de l'acide sulfurique, de l'oléum, et de leurs mélanges.

Selon l'invention, l'agent chlorant peut être choisi dans le groupe constitué du chlorure de thionyle (SOCl₂), du chlorure d'oxalyle (COCl)₂, du pentachlorure de phosphore (PCl₅), du trichlorure de phosphonyle (PCl₃), du trichlorure de phosphoryle (POCl₃), et de leurs mélanges. De préférence, l'agent chlorant est le chlorure de thionyle.

L'étape de chloration peut être réalisée en présence d'un catalyseur, tel que par exemple choisi parmi une amine tertiaire (telle que la méthylamine, triéthylamine, ou la diéthylméthylamine) ; la pyridine ; et la 2,6-lutidine.

Le rapport molaire entre l'acide soufré et le composé de formule (I) peut être compris entre 0,7 et 5, de préférence entre 0,9 et 5.

Le rapport molaire entre l'agent chlorant et le composé de formule (I) peut être compris entre 2 et 10, de préférence entre 2 et 5.

En particulier, lorsque l'agent soufré est l'acide chlorosulfonique, le rapport molaire entre celui-ci et le composé de formule (I) est compris entre 0,9 et 5, et/ou le rapport molaire entre l'agent chlorant et le composé de formule (I) est compris entre 2 et 5.

En particulier, lorsque l'agent soufré est l'acide sulfurique (ou l'oléum), le rapport molaire entre l'acide sulfurique (ou l'oléum) et le composé de formule (I) est compris entre 0,7 et 5.

En particulier, lorsque l'agent soufré est l'acide sulfurique (ou l'oléum), le rapport molaire entre l'acide sulfurique (ou l'oléum) et le composé de formule (I) est compris entre 0,9 et 5, et/ou le rapport molaire entre l'agent chlorant et le composé de formule (I) est compris entre 2 et 10.

L'étape de chloration permet avantageusement de former un composé de formule (II) :

(II) R-(SO₂)-NH-(SO₂)-Cl

Le procédé selon l'invention peut ensuite comprendre une étape de fluoration du composé de formule (II).

La fluoration de ce composé de formule (I) peut être effectuée avec au moins un agent de fluoration et de préférence en présence d'au moins un solvant organique SO1.

Selon un mode de réalisation, l'agent de fluoration est choisi dans le groupe constitué de HF (de préférence HF anhydre), KF, AsF₃, BiF₃, ZnF₂, SnF₂, PbF₂, CuF₂, et de leurs mélanges, l'agent de fluoration étant de préférence HF, et encore plus préférentiellement HF anhydre.

Dans le cadre de l'invention, par « *HF anhydre* », on entend de l'HF contenant moins de 500 ppm d'eau, de préférence moins de 300 ppm d'eau, et de manière préférée moins de 200 ppm d'eau.

L'étape de fluoration est de préférence réalisée dans au moins un solvant organique SO1. Le solvant organique SO1 possède de préférence un nombre donneur compris entre 1 et 70 et avantageusement compris entre 5 et 65. L'indice donneur d'un solvant représente la valeur -ΔH, ΔH étant l'enthalpie de l'interaction entre le solvant et le pentachlorure d'antimoine (selon la méthode décrite dans Journal of Solution Chemistry, vol. 13, n°9, 1984). Comme solvant organique SO1, on peut citer notamment les esters, les nitriles, les dinitriles, les éthers, les diéthers, les amines, les phosphines, et leurs mélanges.

De préférence, le solvant organique SO1 est choisi dans le groupe constitué de l'acétate de méthyle, de l'acétate d'éthyle, de l'acétate de butyle, de l'acétonitrile, du propionitrile, de l'isobutyronitrile, du glutaronitrile, du dioxane, du tétrahydrofurane, de la triéthylamine, de la tripropylamine, de la diéthylisopropylamine, de la pyridine, de la triméthylphosphine, de la triéthylphosphine, de la diéthylisopropylphosphine, et de leurs mélanges. En particulier, le solvant organique SO1 est le dioxane.

L'étape de fluoration peut être mise en œuvre à une température comprise entre 0°C et la température d'ébullition du solvant organique SO1 (ou du mélange de solvants organiques SO1). De préférence, l'étape de fluoration est réalisée à une température comprise entre 5°C et la température d'ébullition du solvant organique SO1 (ou du mélange de solvants organiques SO1), préférentiellement entre 20°C et la température d'ébullition du solvant organique SO1 (ou du mélange de solvants organiques SO1).

L'étape de fluoration, de préférence avec l'acide fluorhydrique anhydre, peut être mise en œuvre à une pression P, de préférence comprise entre 0 et 16 bars abs.

Cette étape de fluoration est de préférence mise en œuvre en dissolvant le composé de formule (II) dans le solvant organique SO1, ou le mélange de solvants organiques SO1, préalablement à l'étape de réaction avec l'agent de fluoration, de préférence avec l'HF anhydre.

Le rapport massique entre le composé de formule (II) et le solvant organique SO1, ou le mélange de solvants organiques SO1, est de préférence compris entre 0,001 et 10, et avantageusement entre 0,005 et 5.

Selon un mode de réalisation, l'HF anhydre est introduit dans le milieu réactionnel, de préférence sous forme gazeuse.

Le rapport molaire entre l'agent de fluoration, de préférence l'HF anhydre, et le composé de formule (II) mis en jeu est de préférence compris entre 1 et 10, et avantageusement entre 1 et 5.

L'étape de réaction avec l'agent de fluoration, de préférence l'HF anhydre, peut être effectuée en milieu fermé ou en milieu ouvert, de préférence l'étape de fluoration est réalisée en milieu ouvert avec notamment dégagement d'HCl sous forme gaz.

La réaction de fluoration conduit typiquement à la formation de HCl, dont la majorité peut être dégazée du milieu réactionnel (tout comme l'HF excédentaire si l'agent de fluoration est le HF), par exemple par entraînement (stripping) par un gaz neutre (tel que l'azote, l'hélium ou l'argon).

Toutefois, de l'HF et/ou de l'HCl résiduels peuvent être dissous dans le milieu réactionnel. Dans le cas de l'HCl les quantités sont très faibles car aux pressions et température de travail l'HCl est principalement sous forme gaz.

La composition obtenue à l'issue de l'étape de fluoration peut être stockée dans un récipient résistant à l'HF.

La composition obtenue à l'étape de fluoration peut comprendre HF (il s'agit en particulier du HF n'ayant pas réagi), le bis(fluorosulfonyl)imide, le solvant SO1 (tel que par exemple le dioxane), et éventuellement HCl, et/ou éventuellement des composés lourds.

Le procédé selon l'invention peut de préférence comprendre une étape de distillation de la solution obtenu après l'étape de fluoration.

Selon un mode de réalisation, l'étape de distillation permet de former et récupérer :
- un premier flux F1 comprenant HF, éventuellement le solvant organique SO1 et/ou éventuellement HCl, de préférence en tête de colonne de distillation, ledit flux F1 étant gazeux ou liquide ;
- un second flux F2 comprenant le bis(fluorosulfonyl)imide, et éventuellement des composés lourds, de préférence en pied de colonne de distillation, ledit flux F2 étant de préférence liquide.

Lorsque le flux F2 comprend des composés lourds, celui-ci peut être soumis à une étape supplémentaire de distillation dans une seconde colonne de distillation, pour former et récupérer :
- un flux F2-1 comprenant le bis(fluorosulfonyl)imide exempt de composés lourds, de préférence en tête de colonne de distillation, ledit flux F2-1 étant de préférence liquide,
- un flux F2-2 comprenant les composés lourds et le bis(fluorosulfonyl)imide, de préférence en pied de colonne de distillation, ledit flux F2-2 contenant moins de 10% en poids du bis(fluorosulfonyl)imide contenu dans la composition obtenue après l'étape de fluoration, de préférence moins de 7% en poids, et préférentiellement moins de 5% en poids, ledit flux F2-2 étant de préférence liquide.

Selon un mode de réalisation, l'étape de distillation de la composition obtenue à l'étape de fluoration permet de former et récupérer, grâce à l'utilisation de deux colonnes de distillation :
- un premier flux F1 comprenant HF, éventuellement le solvant organique SO1 et/ou éventuellement HCl en tête de la première colonne de distillation, ledit flux F1 étant gazeux ou liquide ;
- un second flux F2 comprenant le bis(fluorosulfonyl)imide, et éventuellement des composés lourds en pied de la première colonne de distillation, ledit flux F2 étant de préférence liquide ;
- ledit flux F2 étant soumis à une étape de distillation dans une seconde colonne de distillation, pour former et récupérer :
- un flux F2-1 comprenant le bis(fluorosulfonyl)imide exempt de composés lourds en tête de la deuxième colonne de distillation, ledit flux F2-1 étant de préférence liquide,
- un flux F2-2 comprenant les composés lourds et le bis(fluorosulfonyl)imide, en pied de la deuxième colonne de distillation, ledit flux F2-2 contenant moins de 10% en poids du bis(fluorosulfonyl)imide contenu dans la composition obtenue à l'étape de fluoration, de préférence moins de 7% en poids, et préférentiellement moins de 5% en poids, ledit flux F2-2 étant de préférence liquide.

Dans le cadre de l'invention, on entend par « *composés lourds* », des composés organiques ayant un point d'ébullition supérieur à celui du bis(fluorosulfonyl)imide. Ils peuvent résulter de réactions de coupure du composé de formule (II) conduisant par exemple à des composés tels que FSO₂NH₂, et/ou de réactions de dégradation de solvants conduisant à la formation d'oligomères.

Selon un mode de réalisation, l'étape de distillation de la composition obtenue à l'étape de fluoration permet de former et récupérer :
- un premier flux F'1 comprenant HF, éventuellement le solvant organique SO1 et/ou éventuellement HCl, de préférence en tête de colonne de distillation, ledit flux F'1 étant gazeux ou liquide ;
- un second flux F'2 comprenant le bis(fluorosulfonyl)imide, de préférence récupéré par soutirage latéral, ledit flux F'2 étant de préférence liquide ;
- un troisième flux F'3 comprenant des lourds et le bis(fluorosulfonyl)imide de préférence en pied de colonne de distillation, ledit flux F'3 contenant moins de 10% en poids du bis(fluorosulfonyl)imide contenu dans la composition obtenue à l'étape de fluoration, de préférence moins de 7% en poids, et préférentiellement moins de 5% en poids, ledit flux F'3 étant de préférence liquide.

Pour effectuer le soutirage latéral, la colonne de distillation peut contenir au moins un plateau.

L'étape de distillation peut être effectuée à une pression allant de 0 à 5 bar abs, de préférence de 0 à 3 bar abs, préférentiellement de 0 à 2 bar abs, et avantageusement de 0 à 1 bar abs.

L'étape de distillation peut être effectuée :
- à une température en pied de colonne de distillation allant de 150°C à 200°C, de préférence de 160°C à 180°C, et préférentiellement de 165°C à 175°C, à une pression de 1 bar abs ; ou
- à une température en pied de colonne de distillation allant de 30°C à 100°C, de préférence de 40°C à 90°C, et préférentiellement de 40°C à 85°C, à une pression de 0,03 bar abs.

L'étape de distillation peut être effectuée dans tout dispositif conventionnel. Il peut s'agir de dispositif de distillation comprenant une colonne de distillation, un bouilleur et un condenseur.

La colonne de distillation peut comprendre :
- au moins un garnissage tel que par exemple un garnissage vrac et/ou un garnissage structuré,
   et/ou
- des plateaux tels que par exemple des plateaux perforés, des plateaux à clapets fixes, des plateaux à clapets mobiles, des plateaux à calottes, ou leurs combinaisons.

La hauteur de la colonne de distillation dépend typiquement de la nature des composés à séparer. Typiquement, selon les débits mis en œuvre, la colonne de distillation peut avoir tout type de diamètre : petit (inférieur ou égal à 1 mètre) ou élevé (supérieur à 1 mètre).

Le matériau de la colonne de distillation, de ses constituants internes (garnissage et/ou plateaux), du bouilleur, et/ou du condenseur est avantageusement choisi parmi les matériaux résistants à la corrosion, en raison de la présence potentielle de HF et/ou HCl dans la composition soumise à la distillation.

Les matériaux résistants à la corrosion peuvent être choisis parmi les aciers émaillés, le nickel, le titane, le chrome, le graphite, les carbures de silicium, les alliages à base de nickel, les alliages à base de cobalt, les alliages à base de chrome, les aciers revêtus partiellement ou totalement par un revêtement protecteur de polymère fluoré (tel que par exemple PVDF : polyfluorure de vinylidène, le PTFE : polytétrafluoroéthylène, le PFA : copolymère de C₂F₄ et d'éther vinylique perfluoré, le FEP : copolymère de C₂F₄ et de C₃F₆ , le ETFE : copolymère d'éthylène et tétrafluoroéthylène, ou le FKM : copolymère d'hexafluoropropylène et de difluoroéthylène).

Les alliages à base de nickel, sont de préférence des alliages comprenant au moins 40% en poids de nickel, de préférence au moins 50% en poids de nickel par rapport au poids total de l'alliage. On peut par exemple citer les alliages Inconel^{®}, Hastelloy^{®}, ou Monel^{®}.

Les flux F1 et F'1 peuvent comprendre HF, HCl, le solvant organique SO1 (en particulier le dioxane).

Selon un mode de réalisation, le flux F1 comprend de 2 à 70 % en poids de HF, de préférence de 5 à 60 % en poids de HF par rapport au poids total du flux F1, et de 30% à 98 % en poids de solvant organique SO1, de préférence de 40% à 95% en poids de SO1, par rapport au poids total du flux F1.

Selon un mode de réalisation, le flux F'1 comprend de 2 à 70 % en poids de HF, de préférence de 5 à 60 % en poids de HF par rapport au poids total du flux F'1, et de 30% à 98 % en poids de solvant organique SO1, de préférence de 40% à 95% en poids de SO1, par rapport au poids total du flux F'1.

Selon un mode de réalisation, le flux F2 comprend de 50 à 100 % en poids de bis(fluorosulfonyl)imide, de préférence de 70 à 99 % en poids de bis(fluorosulfonyl)imide par rapport au poids total du flux F2.

Selon un mode de réalisation, le flux F'2 comprend de 50 à 100 % en poids de bis(fluorosulfonyl)imide, de préférence de 70 à 99 % en poids de bis(fluorosulfonyl)imide par rapport au poids total du flux F'2.

Selon un mode de réalisation, le flux F2-1 comprend de 50 à 100 % en poids de bis(fluorosulfonyl)imide, de préférence de 70 à 99 % en poids de bis(fluorosulfonyl)imide par rapport au poids total du flux F2-1.

Ainsi, le flux comprenant le bis(fluorosulfonyl)imide (ou la solution issue de l'étape de fluoration), par exemple l'un des flux F2, F'2 et/ou F2-1 décrits ci-dessus, est mis en contact avec une base de lithium.

La base de lithium peut comprendre au moins un atome de lithium et au moins un atome d'oxygène. Ainsi, cette base est capable de générer de l'eau après sa réaction avec le bis(fluorosulfonyl)imide. Cette base peut par exemple comprendre ou être choisie parmi l'hydroxyde de lithium (LiOH), le carbonate de lithium (Li₂CO₃), et leurs mélanges.

De préférence, la base de lithium ne comprend pas de fluorure de lithium.

Le rapport molaire de la base de lithium sur le bis(fluorosulfonyl)imide peut être de 0,9 à 1, 1 et de préférence de 1 à 1,05.

Cette mise en contact est effectuée dans un solvant. Le solvant est choisi parmi les carbonates, les éthers et les nitriles.

Parmi les éthers, on peut citer les éthers linéaires ou cycliques, tels que par exemple le diméthoxyéthane (DME), les éthers méthyliques des oligoéthylène glycols de 2 à 5 unités oxyéthylènes, le dioxolane, le dioxane, le dibutyle éther, le tétrahydrofurane, et leurs mélanges.

Parmi les nitriles, on peut citer par exemple l'acétonitrile, le pyruvonitrile, le propionitrile, le méthoxypropionitrile, le diméthylaminopropionitrile, le butyronitrile, l'isobutyronitrile, le valéronitrile, le pivalonitrile, l'isovaléronitrile, le glutaronitrile, le méthoxyglutaronitrile, le 2-méthylglutaronitrile, le 3-méthylglutaronitrile, l'adiponitrile, le malononitrile, le 1,2,6-tricyanohexane et leurs mélanges. Un nitrile préféré est l'acétonitrile.

Parmi les carbonates, on peut citer par exemple les carbonates cycliques tels que par exemple le carbonate d'éthylène, le carbonate de propylène, le carbonate de butylène, le carbonate de diméthyle, le carbonate de diéthyle, le carbonate de méthyle éthyle, le carbonate de diphényle, le carbonate de méthyle phényle, le carbonate de dipropyle, le carbonate de méthyle et de propyle, le carbonate d'éthyle et de propyle, le carbonate de vinylène, le fluoroethylène carbonate, le trifluoropropylène carbonate ou leurs mélanges.

De préférence, le solvant utilisé pour la mise en contact de la base de lithium avec le bis(fluorosulfonyl)imide est un carbonate, et encore de préférence le carbonate de diméthyle.

Le rapport massique bis(fluorosulfonyl)imide sur solvant peut être de 10 à 60 %, et de préférence de 30 à 40%.

Cette étape peut être effectuée en ajoutant le bis(fluorosulfonyl)imide et la base de lithium dans le solvant. Par exemple, le bis(fluorosulfonyl)imide peut être ajouté dans une dispersion de la base de lithium dans le solvant.

De plus, l'étape de mise en contact peut être effectuée à une température de 0 à 50°C.

Ainsi, cette étape permet d'obtenir un mélange comprenant le bis(fluorosulfonyl)imidure de lithium et de l'eau. Ce mélange peut avoir une teneur en eau égale ou supérieure à 2 %, de préférence égale ou supérieure à 3 %, de préférence égale ou supérieure à 4 % par rapport au poids du mélange.

Ce mélange peut également comprendre une ou plusieurs impuretés. Ces impuretés peuvent comprendre par exemple du fluorure de lithium (LiF), du sulfate de lithium (Li₂SO₄), et/ou du chlorure de lithium (LiCl).

Une étape de filtration peut éventuellement être réalisée après l'étape de mise en contact.

Selon certains modes de réalisation, le procédé selon l'invention comprend une étape de pervaporation du mélange obtenu ci-dessus. Cette étape permet de diminuer la teneur en eau dans le mélange. Ainsi, à la fin de cette étape, le mélange comprenant le bis(fluorosulfonyl)imidure de lithium peut avoir une teneur en eau inférieure ou égale à 500 ppm, et de préférence inférieure ou égale à 400 ppm par rapport au poids du mélange. Par exemple, cette teneur peut être de 100 à 150 ppm ; ou de 150 à 200 ppm ; ou de 200 à 250 ppm ; ou de 250 à 300 ppm ; ou de 300 à 350 ppm ; ou de 350 à 400 ppm ; ou de 400 à 450 ppm ; ou de 450 à 500 ppm par rapport au poids du mélange.

En complément ou alternativement, le procédé selon l'invention peut comprendre une étape de distillation azéotropique du mélange obtenu ci-dessus. Cette distillation peut par exemple être effectuée par évaporation (évaporation en batch, ou évaporation en film tombant, ou évaporation de type film raclé) où en présence d'une colonne de distillation, de préférence à une pression comprise entre 0,01 et 1013 mbars et à une température de préférence inférieure à 100°C, et encore de préférence inférieure à 50°C. Cette étape permet également de diminuer la teneur en eau dans le mélange. Ainsi, à la fin de cette étape, le mélange comprenant le bis(fluorosulfonyl)imidure de lithium peut avoir une teneur en eau inférieure ou égale à 500 ppm, et de préférence inférieure ou égale à 400 ppm par rapport au poids du mélange. Par exemple, cette teneur peut être de 100 à 150 ppm ; ou de 150 à 200 ppm ; ou de 200 à 250 ppm ; ou de 250 à 300 ppm ; ou de 300 à 350 ppm ; ou de 350 à 400 ppm ; ou de 400 à 450 ppm ; ou de 450 à 500 ppm par rapport au poids du mélange.

Alternativement ou en complément d'une des étapes décrites ci-dessus, le procédé selon l'invention comprend une étape de diafiltration du mélange. Par « *mélange* » on entend ici soit le mélange obtenu après l'étape de mise en contact de la base de lithium avec le bis(fluorosulfonyl)imide, soit le mélange obtenu après l'étape de pervaporation, soit le mélange obtenu après l'étape de distillation azéotropique.

La diafiltration est effectuée sur une membrane de nanofiltration.

Selon certains modes de réalisation, la membrane de nanofiltration peut présenter un seuil de coupure de 80 à 250 Daltons, de préférence de 100 à 200 Daltons et encore de préférence de 120 à 180 Daltons.

La présence de la membrane de nanofiltration permet d'un côté de retenir le bis(fluorosulfonyl)imidure de lithium et de l'autre côté laisser passer l'eau, le solvant et les différentes impuretés. Ainsi, à la fin de cette étape on obtient d'un côté un concentrat enrichi en bis(fluorosulfonyl)imidure de lithium et appauvri en eau (et en impuretés) et de l'autre côté un perméat appauvri en bis(fluorosulfonyl)imidure de lithium et enrichi en eau (et en impuretés).

Selon certains modes de réalisation l'étape de diafiltration est effectuée à une pression de 1 à 60 bar.

Selon certains modes de réalisation l'étape de diafiltration est effectuée à une température de5 à 60°C.

De manière préférentielle, durant l'étape de diafiltration, du solvant peut être ajouté au concentrat. Ainsi, de préférence, la teneur en bis(fluorosulfonyl)imidure de lithium dans le concentrat est essentiellement égale à la teneur en bis(fluorosulfonyl)imidure de lithium dans le mélange en entrée de la diafiltration. De préférence, ce solvant est le même que le solvant utilisé dans l'étape de mise en contact du bis(fluorosulfonyl)imide avec la base de lithium. Alternativement, ce solvant est différent du solvant utilisé dans l'étape de mise en contact du bis(fluorosulfonyl)imide avec la base de lithium. Dans ce cas, le solvant peut être choisi parmi les carbonates, les éthers et les nitriles comme détaillé ci-dessus. De préférence, le solvant ajouté est dépourvu d'eau ou comporte une teneur en eau inférieure ou égale à 50 ppm, ou inférieure ou égale à 20 ppm par exemple. Alternativement, du solvant peut être ajouté dans le mélange avant l'étape de diafiltration pour effectuer une dilution. Dans ce cas, le concentrat peut ensuite être concentré afin d'éliminer une partie du solvant.

Lors de l'étape de diafiltration, la quantité de solvant utilisé peut être de 1 à 20 fois le volume du mélange obtenu après l'étape de mis en contact de la base de lithium avec le bis(fluorosulfonyl)imide. Plus particulièrement, dans le cas où le procédé comprend une étape de pervaporation ou de distillation azéotropique (avant l'étape de diafiltration), la quantité de solvant utilisée lors de l'étape de diafiltration peut être de 1 à 10 fois, et de préférence de 2 à 3 fois le volume du mélange obtenu après l'étape de mis en contact de la base de lithium avec le bis(fluorosulfonyl)imide. En revanche, dans le cas où le procédé est dépourvu d'étape de pervaporation ou de distillation azéotropique, la quantité de solvant utilisée lors de l'étape de diafiltration peut être de 5 à 20 fois, et de préférence de 6 à 8 fois le volume du mélange obtenu après l'étape de mis en contact de la base de lithium avec le bis(fluorosulfonyl)imide.

Selon certains modes de réalisation préférés, le concentrat obtenu après l'étape de diafiltration comprend une teneur en eau égale ou inférieure à 100 ppm, de préférence égale ou inférieure à 50 ppm, et encore de préférence égale ou inférieure à 20 ppm par rapport au poids du concentrat. Cette teneur peut être par exemple de 1 à 10 ppm ; ou de 10 à 20 ppm ; ou de 20 à 30 ppm ; ou de 30 à 40 ppm ; ou de 40 à 50 ppm ; ou de 50 à 60 ppm ; ou de 60 à 70 ppm ; ou de 70 à 80 ppm ; ou de 80 à 90 ppm ; ou de 90 à 100 ppm par rapport au poids du concentrat.

De plus, le concentrat obtenu après l'étape de diafiltration peut comprendre une teneur en impuretés égale ou inférieure à 100 ppm de fluorure de lithium, et/ou égale ou inférieure à 10 ppm de chlorure de lithium, et/ou égale ou inférieure à 50 ppm de sulfate de lithium.

Ainsi, le concentrat peut avoir une teneur en bis(fluorosulfonyl)imidure de lithium de 10 à 60 % en poids, et de préférence de 30 à 40 % en poids.

### Utilisation

La présente invention concerne également l'utilisation du bis(fluorosulfonyl)imidure de lithium obtenu par le procédé selon l'invention, dans des batteries Li-ion telles que décrites ci-dessus, notamment dans des électrolytes de batteries Li-ion.

En particulier, il peut s'agir de batteries Li-ion d'appareils nomades (par exemple les téléphones portables, les appareils photos, les tablettes ou les ordinateurs portables), ou de véhicules électriques, ou de stockage d'énergie renouvelable (tel que le photovoltaïque ou l'éolien).

Selon certains modes de réalisation, le concentrat obtenu après l'étape de diafiltration peut être directement utilisé au tant qu'électrolyte de batterie Li-ion.

Selon d'autres modes de réalisations préférés, le concentrat obtenu après l'étape de diafiltration peut être utilisé au tant qu'électrolyte de batterie Li-ion après l'addition d'un ou plusieurs composants tels que des sels de lithium supplémentaires, des solvants additionnelles et/ou des additifs. Ces composants sont tels que détaillés ci-dessus.

## Revendications

1. Procédé de préparation du bis(fluorosulfonyl)imidure de lithium, comprenant les étapes suivantes :
- mise en contact du bis(fluorosulfonyl)imide avec une base de lithium dans un solvant choisi parmi les carbonates, les éthers et les nitriles pour obtenir un mélange comprenant du bis(fluorosulfonyl)imidure de lithium et de l'eau ;
- diafiltration du mélange sur une membrane de nanofiltration de sorte à obtenir d'une part un concentrat enrichi en bis(fluorosulfonyl)imidure de lithium et appauvri en eau et d'autre part un perméat appauvri en bis(fluorosulfonyl)imidure de lithium et enrichi en eau.

2. Procédé selon la revendication 1, dans lequel le solvant est un carbonate, de préférence choisi parmi le carbonate de diméthyle, le carbonate de méthyle éthyle, le carbonate de diéthyle, le carbonate d'éthylène, le carbonate de propylène, le carbonate de butylène, le carbonate de diphényle, le carbonate de méthyle phényle, le carbonate de dipropyle, le carbonate de méthyle et de propyle, le carbonate d'éthyle et de propyle, le carbonate de vinylène, le fluoroethylène carbonate, le trifluoropropylène carbonate ou leurs mélanges.

3. Procédé selon l'une des revendications 1 ou 2, dans lequel la base de lithium est choisie parmi l'hydroxyde de lithium, le carbonate de lithium, et leurs mélanges.

4. Procédé selon l'une des revendications 1 ou 3, dans lequel la membrane de nanofiltration présente un seuil de coupure de 80 à 250 Daltons, de préférence de 100 à 200 Daltons et encore de préférence de 120 à 180 Daltons.

5. Procédé selon l'une des revendications 1 à 4, comprenant une étape de pervaporation entre l'étape de mise en contact du bis(fluorosulfonyl)imide avec une base de lithium et l'étape de diafiltration.

6. Procédé selon l'une des revendications 1 à 5, comprenant une étape de distillation azéotropique entre l'étape de mise en contact du bis(fluorosulfonyl)imide avec une base de lithium et l'étape de diafiltration.

7. Procédé selon l'une des revendications 1 à 6, dans lequel le concentrat enrichi en bis(fluorosulfonyl)imidure de lithium et appauvri en eau comprend une teneur en eau égale ou inférieure à 100 ppm, de préférence égale ou inférieure à 50 ppm, et encore de préférence égale ou inférieure à 20 ppm par rapport au poids du concentrat.

8. Procédé selon l'une des revendications 1 à 7, dans lequel du solvant est ajoutée lors de l'étape de diafiltration au concentrat, le solvant étant de préférence le même que le solvant utilisé dans l'étape de mise en contact du bis(fluorosulfonyl)imide avec une base de lithium.

9. Procédé selon l'une des revendications 1 à 8, dans lequel l'étape de diafiltration est effectuée à une pression de 1 à 60 bar.

10. Procédé de préparation d'un électrolyte de batterie Li-ion comprenant :
- la préparation du bis(fluorosulfonyl)imidure de lithium selon l'une des revendications 1 à 9 ;
- la préparation d'un électrolyte comprenant le bis(fluorosulfonyl)imidure de lithium.

## Patentansprüche

1. Verfahren zur Herstellung von Lithiumbis(fluorsulfonyl)imid, das die folgenden Schritte umfasst:
- das In-Kontakt-Bringen von Bis(fluorsulfonyl)imid mit einer Lithiumbase in einem Lösungsmittel, das aus Carbonaten, Ethern und Nitrilen ausgewählt ist, um eine Lithiumbis(fluorsulfonyl)imid und Wasser umfassende Mischung zu erhalten;
- die Diafiltration der Mischung an einer Nanofiltrationsmembran, um einerseits ein mit Lithiumbis(fluorsulfonyl)imid angereichertes und an Wasser verarmtes Konzentrat und andererseits ein an Lithiumbis(fluorsulfonyl)imid verarmtes und mit Wasser angereichertes Permeat zu erhalten.

2. Verfahren nach Anspruch 1, wobei das Lösungsmittel ein Carbonat ist, das vorzugsweise aus Dimethylcarbonat, Methylethylcarbonat, Diethylcarbonat, Ethylencarbonat, Propylencarbonat, Butylencarbonat, Diphenylcarbonat, Methylphenylcarbonat, Dipropylcarbonat, Methylpropylcarbonat, Ethylpropylcarbonat, Vinylencarbonat, Fluorethylencarbonat, Trifluorpropylencarbonat oder Mischungen davon ausgewählt ist.

3. Verfahren nach einem der Ansprüche 1 oder 2, wobei die Lithiumbase aus Lithiumhydroxid, Lithiumcarbonat und Mischungen davon ausgewählt ist.

4. Verfahren nach einem der Ansprüche 1 oder 3, wobei die Nanofiltrationsmembran eine Ausschlussgrenze von 80 bis 250 Dalton, vorzugsweise von 100 bis 200 Dalton und noch stärker bevorzugt von 120 bis 180 Dalton aufweist.

5. Verfahren nach einem der Ansprüche 1 bis 4, dass einen Pervaporationsschritt zwischen dem Schritt des In-Kontakt-Bringens von Bis(fluorsulfonyl)imid mit einer Lithiumbase und dem Diafiltrationsschritt umfasst.

6. Verfahren nach einem der Ansprüche 1 bis 5, dass einen Schritt einer azeotropen Destillation zwischen dem Schritt des In-Kontakt-Bringens von Bis(fluorsulfonyl)imid mit einer Lithiumbase und dem Diafiltrationsschritt umfasst.

7. Verfahren nach einem der Ansprüche 1 bis 6, wobei das mit Lithiumbis(fluorsulfonyl)imid angereicherte und an Wasser verarmte Konzentrat einen Wassergehalt von gleich oder weniger als 100 ppm, vorzugsweise gleich oder weniger als 50 ppm und noch stärker bevorzugt von gleich oder weniger als 20 ppm aufweist, bezogen auf das Gewicht des Konzentrats.

8. Verfahren nach einem der Ansprüche 1 bis 7, wobei Lösungsmittel im Diafiltrationsschritt zum Konzentrat gegeben wird, wobei es sich beim Lösungsmittel vorzugsweise um dasselbe wie dasjenige handelt, das im Schritt des In-Kontakt-Bringens von Bis(fluorsulfonyl)imid mit einer Lithiumbase verwendet wird.

9. Verfahren nach einem der Ansprüche 1 bis 8, wobei der Diafiltrationsschritt bei einem Druck von 1 bis 60 bar erfolgt.

10. Verfahren zur Herstellung eines Elektrolyten einer Li-Ionen-Batterie, das Folgendes umfasst:
- die Herstellung von Lithiumbis(fluorsulfonyl)imid nach einem der Ansprüche 1 bis 9;
- die Herstellung eines Lithiumbis(fluorsulfonyl)imid umfassenden Elektrolyten.

## Claims

1. A process for preparing lithium bis(fluorosulfonyl)imide, comprising the following steps of:
- contacting of bis(fluorosulfonyl)imide with a lithium base in a solvent selected from carbonates, ethers and nitriles, to obtain a mixture comprising lithium bis(fluorosulfonyl)imide and water;
- diafiltration of the mixture on a nanofiltration membrane so as to obtain, firstly, a concentrate enriched in lithium bis(fluorosulfonyl)imide and depleted in water and, secondly, a permeate depleted in lithium bis(fluorosulfonyl)imide and enriched in water.

2. The process as claimed in claim 1, wherein the solvent is a carbonate, preferably selected from dimethyl carbonate, methyl ethyl carbonate, diethyl carbonate, ethylene carbonate, propylene carbonate, butylene carbonate, diphenyl carbonate, methyl phenyl carbonate, dipropyl carbonate, methyl propyl carbonate, ethyl propyl carbonate, vinylene carbonate, fluoroethylene carbonate, trifluoropropylene carbonate, or mixtures thereof.

3. The process as claimed in either of claims 1 and 2, wherein the lithium base is selected from lithium hydroxide, lithium carbonate, and mixtures thereof.

4. The process as claimed in either of claims 1 and 3, wherein the nanofiltration membrane has a cutoff threshold of 80 to 250 dalton, preferably 100 to 200 dalton, and more preferably 120 to 180 dalton.

5. The process as claimed in one of claims 1 to 4, comprising a step of pervaporation between the step of contacting bis(fluorosulfonyl)imide with a lithium base and the diafiltration step.

6. The process as claimed in one of claims 1 to 5, comprising a step of azeotropic distillation between the step of contacting bis(fluorosulfonyl)imide with a lithium base and the diafiltration step.

7. The process as claimed in one of claims 1 to 6, wherein the concentrate enriched in lithium bis(fluorosulfonyl)imide and depleted in water comprises a content of water of equal to or less than 100 ppm, preferably equal to or less than 50 ppm, and more preferably equal to or less than 20 ppm, relative to the weight of the concentrate.

8. The process as claimed in one of claims 1 to 7, wherein solvent is added during the diafiltration step to the concentrate, the solvent preferably being the same as the solvent used in the step of contacting bis(fluorosulfonyl)imide with a lithium base.

9. The process as claimed in one of claims 1 to 8, wherein the diafiltration step is effected at a pressure from 1 to 60 bar.

10. A process for preparing an Li-ion battery electrolyte, comprising:
- preparing lithium bis(fluorosulfonyl)imide as claimed in one of claims 1 to 9;
- preparing an electrolyte comprising lithium bis(fluorosulfonyl)imide.
